# EUROPEAN PATENT APPLICATION

(11) **EP 2 394 966 A1**
(43) Date of publication of application: **14.12.2011**
(21) Application number: 11398004.9
(22) Date of filing: 18.05.2011
(51) Int. Cl.: C02F 3/22, C02F 3/28

(54) **Apparatus for the retention of (bio)solids and a method for the treatment of a waste material using said apparatus**

(30) Priority: 19.05.2010 PT 10512810
(71) Applicant: Ambisys, s.a., 4490-658 Povoa de Varzim (PT); Universidade do Minho, 4700-320 Braga (PT)
(72) Inventor: Dos Santos Alves, Maria Madalena, 4710-208 Braga (PT); Amilcare Picavet, Merijn, 4200-212 Porto (PT)
(74) Representative: Canelas, Alberto Herminio

(57) **Abstract**

The present invention relates to an apparatus for the retention of (bio)solids inside a reaction vessel (1) comprising a vertically elongated effluent compartment (2), equipped with two or more solids/gas collection hoods (8), said 2 or more hoods connected to one or more riser tubes (9), being open at the top and equipped with sludge deflection plates (10), said effluent compartment being equipped with a treated wastewater outlet system at the top part of said effluent compartment comprising one or more overflow weirs (11). The present invention further relates a method for the anaerobic treatment of a waste material selected from wastewater and/or organic waste, such as pig manure, waste activated sludge or kitchen waste, or for the aerobic or aerobic/anaerobic treatment of wastewater using said apparatus.

## Description

### Field of the Invention

The invention presented is a sludge lift separator designed for the retention and recycling of sludge or bioslurries with or without floatation tendencies within biological reactors for the treatment of wastewater or organic slurries either under anaerobic or aerobic conditions or both.

### Background of the Invention

There are several reasons for industrial wastewater treatment to be a necessary practice. Firstly, public awareness of the problems caused by polluted water is increasing. Secondly, wastewater can be a source of useful products, such as energy. Thirdly, it is becoming more attractive to reuse treated wastewater, since the intake of water for production processes is increasingly expensive.

Biological treatment, be it anaerobic, aerobic or a combination of both, forms the heart within most wastewater treatment systems and can be used for the removal/degradation of a big variety of organic and inorganic compounds. Organic compounds include alcohols, volatile fatty acids (VFA), long chain fatty acids (LCFA), proteins and aromatic compounds. Inorganic compounds include sulphur, nitrogen and phosphorus compounds, and heavy metals. In the case of anaerobic wastewater treatment of water containing organic compounds, renewable energy sources such as biogas can be produced.

Because industrial wastewaters are relatively concentrated, high-rate biological systems are preferred. This way, one can considerably save on treatment foot print, since reactors can be kept compact through minimisation of the hydraulic retention time (HRT). HRTs of high-rate biological treatment systems normally range from 4 hours to 2 days. Due to the low HRTs, high-rate biological treatment systems require biosolids retention for them to properly operate. Biomass settling through granulation and biomass immobilisation are commonly applied technologies. Examples of granular sludge reactors are the upflow anaerobic sludge blanket reactor (UASB) and the expanded granular sludge blanket reactor (EGSB). They are highly suited for treating industrial wastewater with easy degradable organic compounds and found wide application in e.g. the brewing and paper industry. An inherent problem to granular sludge reactors is the relatively low specific contact area, possibly leading to mass transfer limitation. Therefore, relatively high sludge concentrations are applied as to achieve the wanted conversion rates per cubic metre reactor. Furthermore, granular sludge reactors are relatively sensitive to the presence of LCFA. LCFA induce sludge floatation leading to washout and process destabilisation. Practice has also shown that high salt concentrations lead to granule disintegration, essentially limiting granular reactor application to conductivities lower than 25 mS/cm.

Examples of immobilisation reactors are the fluidised bed reactor, the inverted floating fluidised bed reactor and the fixed film reactor. Here solid media are provided for biomass immobilisation, which are either heavier or lighter than water. Examples of media to which biomass can attach are basalt, polystyrene, plastic balls or fixed surfaces such as tubes or sheets. The fluidised bed type reactors require considerable energy for fluidisation to take place. In the case of aerobic reactors, this is provided in the form of compressed air and, depending on the kind of fluidised bed, a liquid recycle. Under anaerobic conditions, biogas would need to be recycled for the inverted fluidised bed. For a normal fluidised bed a liquid recycle is required. The fixed film reactors have only a limited contact surface available between biomass and wastewater, which may lead to mass transfer problems. All biomass immobilisation methods have in common that high-rate treatment of fat-containing wastewater may lead to biomass detachment and process destabilisation.

Membrane bioreactors are mainly applied for aerobic treatment and are an alternative to conventional activated sludge systems. They are capable of considerably decreasing the treatment footprint. A drawback is membrane fouling, which requires regular cleaning with chemicals such as citric acid and hypochlorite. Fatty compounds present in wastewater may worsen membrane fouling and are preferentially previously removed.

Besides wastewater treatment, biological methods can also be used for solids reduction and stabilisation of organic waste slurries, such as wasted activated sludge, manure and food waste. The solids content may range up to 50 %. A proven method to treat such slurries is anaerobic digestion, resulting in biogas production and a slurry that can be used as fertilizer. For anaerobic digestion of solid waste slurries low-rate anaerobic reactors are used. HRTs are normally higher than 10 days and solids retention is not applied. Mixing in these reactors is either mechanically or by applying a gas or liquid recycle.

Thus, separate technologies are applied for the treatment of industrial wastewater and solid waste slurries, specifically when it comes to anaerobic treatment: high-rate and low-rate, respectively. The present invention makes it possible to use the same solids retention technology for wastewater treatment or anaerobic waste treatment. In the case of wastewater treatment the invention can be used for solids retention in aerobic or anaerobic treatment or both. Furthermore, compounds commonly considered as difficult to deal with, such as fats, are no problem with the present invention. In the case of waste treatment the invention may lead to considerable hydraulic retention time reduction and therefore reduce reactor volumes and capital costs.

### Brief Description of the Drawings

Figure 1 shows a schematic representation of an embodiment of the present invention in a reactor for anaerobic treatment of organic compounds containing wastewater.
Figure 2 shows a schematic representation of an embodiment of the present invention in a reactor for aerobic treatment.
Figure 3 shows a schematic representation of an embodiment of the present invention in a reactor for combined anaerobic and aerobic treatment.

### Summary of the Invention

The present invention is a sludge lift system providing the means to biologically treat virtually any kind of wastewater or solid waste slurry with solids content up to 30 %, provided that the compounds present in the wastewater or solid waste slurry are biologically degradable, either under aerobic or anaerobic conditions. The sludge lift system is designed in such a way that solids are effectively retained inside the reactor without the need for biomass granulation, biomass immobilisation or membrane separation. The sludge lift system makes it possible to effectively treat solid waste slurries under anaerobic or aerobic conditions at reduced hydraulic retention times leading to more compact treatment systems. Furthermore, buoyancy enhancing compounds such as fats and salts are no problem. In fact, they may enhance the sludge lifting effect and therefore improve mixing efficiency of the reactor in which the sludge lift system is installed.

The present invention allows to efficiently collect biological sludge and gaseous compounds in an effluent compartment using properly designed sludge/gas collection hoods. The present invention also allows to transport the collected biological sludge from the sludge collection hoods to the reaction compartment through gas lift action provided by the gases collected together with the sludge. The gas lift action is either provided by biologically produced gas (e.g. biogas), by a gaseous compound or mixture (e.g. air) introduced using a gas sparging system and a compressor, or by both. The present invention still allows to remove solids and gases from the treated effluent using said collection hoods and thus effectively retain the sludge inside the reactor. Yet the present invention allows to provide the proper transportation piping (risers) as to transport the sludge through gas lift action from said hoods to the reaction compartment. Yet another objective of the present invention is to equip the effluent compartment with an effluent withdrawal system, such as an overflow weir, for water to leave the reactor by gravity.

### Detailed Description of the Invention

### Apparatus

It is a first object of the present invention an apparatus for the retention of (bio)solids inside a reaction vessel (1) comprising a vertically elongated effluent compartment (2) for the separation of solids and gas from reactor liquor treated within said reaction vessel, said effluent compartment being open at both ends with the top part essentially above the reactor liquid level and equipped with two or more solids/gas collection hoods (8), said 2 or more hoods alternating on opposite sides of said effluent compartment at different heights, each hood overlapping the other, said 2 or more hoods connected to one or more riser tubes (9) on each side where hoods are installed so that sludge may rise through gas lift action induced by the gas collected together with the sludge by said hoods, each riser tube connected to at least one hood and ending above said reactor liquid level, being open at the top and equipped with sludge deflection plates (10) as to prevent sludge reaching the reactor vessel cover, said effluent compartment being equipped with a treated wastewater outlet system at the top part of said effluent compartment, said outlet system comprising one or more overflow weirs (11), outlets or nozzles at an essentially lower level than said reactor liquid level as to induce gravity flow. This apparatus is hereafter referred to as the Sludge Lift Separator (SLS).

### Method

It is a second object of the present invention a method for the treatment of waste material selected from wastewater and/or organic waste, such as pig manure, waste activated sludge or kitchen waste, comprising the work-up of this material in a vertically elongated reaction vessel (1) in which the apparatus of claim 1 is installed essentially off the bottom section of said reaction vessel, thus creating a reaction compartment outside said apparatus and a biosolids settling compartment below said apparatus.

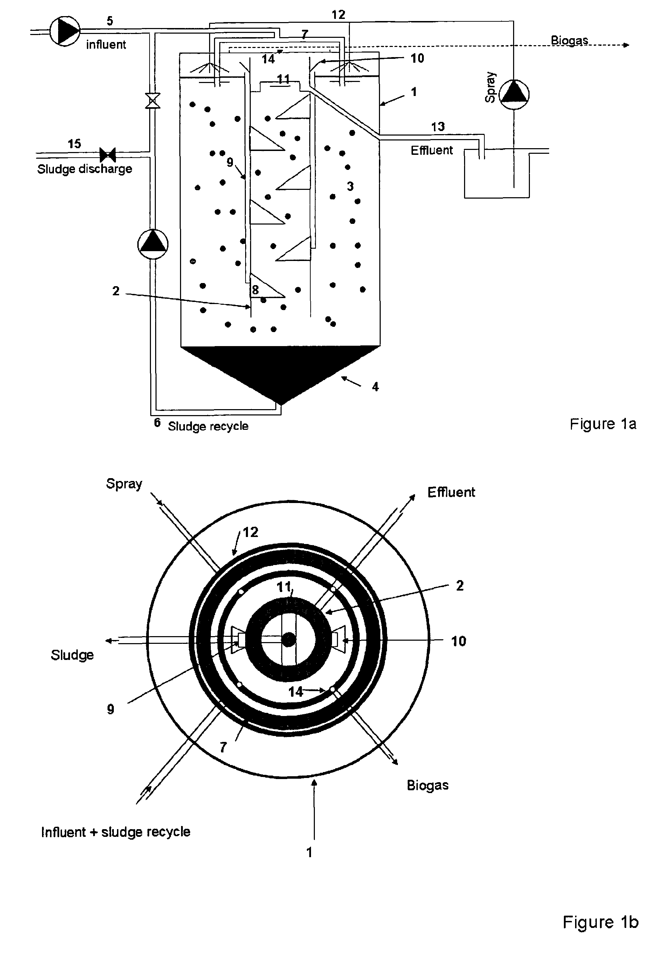

In a first embodiment (Figure 1) the method is anaerobic, the reaction compartment (3) is anaerobic and the biosolids are settled in a settling compartment below said apparatus (4), said process resulting in the biological production of reduced gases, said method further comprising:
a) Extracting the reactor liquor (3) for recycling and/or discharging from said settling compartment;
b) Mixing the waste material (2) to be treated with said extracted reactor liquor, thus providing intimate contact between biosolids and said waste material and resulting in a mixture of both;
c) Injecting said mixture (7) into said reaction compartment, thus providing mixing in and even distribution over said reaction compartment;
d) Evenly spraying (12) water (13) into the head space of said reaction compartment as to counteract foaming induced by said biological gas production;
e) Collecting the gas (14) from said head space of said reaction vessel.

Such method may also comprise injecting a compressed gas or gas mixture into said reaction vessel above said settling compartment, said compressed gas or gas mixture being used to improve mixing, as a carrier gas to strip gases produced, and/or as electron donor for the biological reduction of oxidised compounds present in the waste material.

In a first alternative this method is used for treating wastewater.

In a second alternative this method is used for treating slurries of organic waste, such as pig manure, wasted activated sludge or kitchen waste, said method leading to the biological reduction solids content and production of reduced gases such as biohydrogen or a mixture of gases such as biogas, said slurries having a solids content up to 30 wt.%.

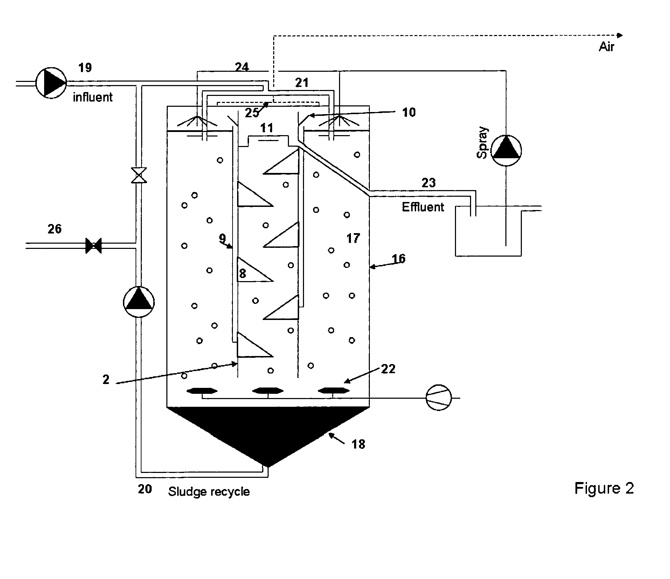

In a second embodiment (Figure 2) the waste material being treated is wastewater and the method is aerobic, the reaction compartment (17) outside said apparatus is aerobic and the biosolids are settled in a biosolids settling compartment (18) below said apparatus, said process further comprising:
a) Extracting reactor liquor (20) for recycling and/or discharging from said settling compartment;
b) Mixing the wastewater (19) to be treated with said extracted reactor liquor, thus providing intimate contact between biosolids and said wastewater and resulting in a mixture of both;
c) Injecting said mixture (21) into said reaction compartment, thus providing mixing in and even distribution over said reaction compartment;
d) Injecting compressed air (22) into the reactor above said settling compartment;
e) Evenly spraying (24) water (23) into the head space of said reaction compartment as to counteract foaming induced by the provision of air;
f) Collecting off-air (25) from said head space of said reaction vessel.

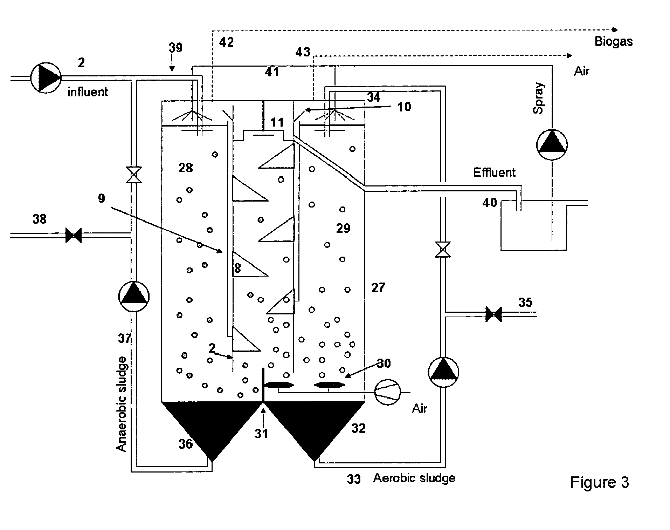

In a third embodiment (Figure 3) the waste material being treated is wastewater and the method is anaerobic and aerobic, the reaction compartment outside said apparatus is anaerobic and aerobic and the biosolids are settled in a biosolids settling compartment below said apparatus, said reaction compartment being further compartmentalised by one or more dividing walls (31) into one or more anaerobic compartments (28) and one or more aerobic compartments (29), said settling compartment being divided into two or more settling zones of which at least one (36) is for anaerobic sludge and located below the one or more anaerobic compartments and at least one (32) is for aerobic sludge and located below the one or more aerobic compartments, said method further comprising in the one or more anaerobic compartments:
a) Extracting reactor liquor (37) for recycling and/or discharging from said one or more anaerobic settling zones;
b) Mixing the wastewater (2) to be treated with said extracted reactor liquor, thus providing intimate contact between biosolids and said wastewater and resulting in a mixture of both;
c) Injecting said mixture (39) into said one or more anaerobic compartments;
d) Evenly spraying (41) water (40) into the head space of said one or more anaerobic compartments as to counteract foaming induced by biological gas production;
e) Collecting gas (42) from the head space of said one or more anaerobic compartments;
f) Optionally, injecting compressed gas or gas mixture, other than oxygen gas or any mixture containing oxygen, into said one or more anaerobic compartments above said anaerobic settling zones;
   said method further comprising in the one or more aerobic compartments:
g) Extracting reactor liquor (33) either for recycling or discharging from said one or more aerobic settling zones;
h) Injecting said reactor liquor (34) into said one or more aerobic compartments as to induce mixing and/or into said one or more anaerobic compartments;
i) Injecting compressed air or oxygen (30) into the one or more aerobic compartments above said one or more aerobic settling zones;
j) Evenly spray (41) water (40) into the head space of said one or more aerobic compartments;
k) A means (43) to collect off-air from the head space of said one or more aerobic compartments.

In all three embodiments of the method of the invention the constituents to be removed from the wastewater are selected from the group consisting of:
i) organic compounds such as long chain fatty acids (LCFA), volatile fatty acids, ethanol and aromatic compounds;
ii) nitrogen compounds such as ammonia and nitrite;
iii) sulphur compounds such as sulphate and sulphide;
iv) heavy metals such as copper and zinc.

The invention is in no way limited to the above described embodiments. In fact, many variations on the above described embodiments are possible within the scope of the claims.

### Detailed description of the figures

A possible configuration of a bioreactor equipped with the present invention is shown in Figure 1a and 1b. Figure 1b shows a top view of the reactor configuration shown in Figure 1a. It concerns a cylindrical reactor **1** suited for sequential or continuous anaerobic treatment of wastewater containing *e.g*. LCFA resulting in the production of biogas. Reactor **1** is equipped with a cylindrical SLS **2** according to the present invention, concentric with the reactor vessel. This results in an anaerobic reaction compartment **3** and a sludge settling compartment **4** below the SLS. Influent **5** is mixed with a sludge recycle **6** taken from the settling compartment **4** of the reactor. The mixture is subsequently injected in a downward motion into the anaerobic reaction compartment **3** using a circular manifold **7** equipped with injection nozzles, thus providing intimate contact between sludge and influent, even distribution throughout the reaction compartment **3** and mixing. In the reactor water is purified and biogas is produced through the action of anaerobic bacteria. As to retain the biosolids present in the reactor and therefore biological activity, the SLS **2** is equipped with overlapping sludge and biogas collection hoods **8** on two opposing sides as to separate the biogas and sludge from treated water. On each side of the SLS **2,** the hoods **8** are connected to a riser pipe **9** as to transport the biosolids slurry through biogas induced gas lift action to the top of the reaction compartment **3.** The slurry is essentially discharged above the liquid level. Deflection plates **10** are installed to prevent sludge from hitting the reactor top. Treated wastewater leaves the reactor through a circular overflow weir **11.** Biogas results in foam formation in reactor compartment **3.** Therefore, reactor **1** is equipped with a circular manifold **12** equipped with spray nozzles for even spraying of reactor effluent **13** as to counteract foaming. Biogas is collected with a circular biogas header **14.** Sludge may be discharged through line **15.**

Figure 2 shows a schematical representation of a reactor **16** for the aerobic treatment of wastewater containing *e.g.* hydrogen sulphide (H₂S). This would result in the production of solid elemental sulphur. The reactor is equipped with an SLS **2** according to the present invention. This results in an aerobic reaction compartment **17** and a sludge settling compartment **18.** Influent **19** is mixed with an activated sludge recycle **20** after which the mixture is injected into the reaction compartment **17** using a manifold **21.** An aeration system **22** is installed above the settling compartment **18** as for aerobic bacteria to oxidise compounds present in the wastewater. Purified wastewater leaves the reaction vessel **16** through the SLS **2,** which separates sludge and air from purified wastewater. In this case air induces an air lift effect by which the sludge is returned to the reactor compartment **17.** Part of the effluent **23** is sprayed through a manifold **24** into the headspace of the reaction vessel to counteract foaming induced by aeration. Off-air is collected using a header **25** and sludge may be discharged through line **26.**

Figure 3 shows a schematical representation of a reactor **27** equipped with an SLS according to the present invention for the combined anaerobic and aerobic treatment of wastewater. In this case the anaerobic treatment results in biogas production. The reactor is divided into 2 reaction compartments: an anaerobic compartment **28** and an aerobic compartment **29.** A means of aeration **30** is only installed in the aerobic compartment **29.** The said reactor compartments are separated by a wall **31,** which does not divide the SLS **2.** Thus, free intermixing between anaerobic and aerobic conditions is possible within said SLS **2.** Anaerobic sludge and biogas are collected on one side in the SLS **2** and discharged into anaerobic compartment **28.** Aerobic sludge is collected on the other side of the SLS **2** and discharged into aerobic compartment **29.** Since two kinds of sludge are produced, two sludge settling zones are present below their respective compartments. Settling zone **32** is for aerobic sludge collection and sludge **33** may be recycled as to provide for additional mixing by injecting it using manifold **34** or may be discharged through line **35.** Settling zone **36** serves for anaerobic sludge settling. Anaerobic sludge **37** may be recycled and contacted with influent **2** or discharged through line **38.** Influent injection is only done into the anaerobic compartment **28** using a manifold **39.** Foaming is counteracted by spraying treated effluent **40** using a spray manifold **41.** Biogas is collected from anaerobic compartment **28** using a header **42.** Off-air is collected from aerobic compartment **29** through header **43.**

## Claims

1. An apparatus for the retention of (bio)solids inside a reaction vessel (1) comprising a vertically elongated effluent compartment (2) for the separation of solids and gas from reactor liquor treated within said reaction vessel, said effluent compartment being open at both ends with the top part essentially above the reactor liquid level and equipped with two or more solids/gas collection hoods (8), said 2 or more hoods alternating on opposite sides of said effluent compartment at different heights, each hood overlapping the other, said 2 or more hoods connected to one or more riser tubes (9) on each side where hoods are installed so that sludge may rise through gas lift action induced by the gas collected together with the sludge by said hoods, each riser tube connected to at least one hood and ending above said reactor liquid level, being open at the top and equipped with sludge deflection plates (10) as to prevent sludge reaching the reactor vessel cover, said effluent compartment being equipped with a treated wastewater outlet system at the top part of said effluent compartment, said outlet system comprising one or more overflow weirs (11), outlets or nozzles at an essentially lower level than said reactor liquid level as to induce gravity flow.

2. A method for the treatment of a waste material selected from wastewater and/or organic waste, such as pig manure, waste activated sludge or kitchen waste, comprising the work-up of this material in a vertically elongated reaction vessel (1) in which the apparatus of claim 1 is installed essentially off the bottom section of said reaction vessel, thus creating a reaction compartment outside said apparatus and a biosolids settling compartment below said apparatus.

3. The method according to claim 2, wherein the method is anaerobic, the reaction compartment (3) is anaerobic and the biosolids are settled in a settling compartment below said apparatus (4), said process resulting in the biological production of reduced gases, said method further comprising:
a) Extracting the reactor liquor (3) for recycling and/or discharging from said settling compartment;
b) Mixing the waste material (2) to be treated with said extracted reactor liquor, thus providing intimate contact between biosolids and said waste material and resulting in a mixture of both;
c) Injecting said mixture (7) into said reaction compartment, thus providing mixing in and even distribution over said reaction compartment;
d) Evenly spraying (12) water (13) into the head space of said reaction compartment as to counteract foaming induced by said biological gas production;
e) Collecting the gas (14) from said head space of said reaction vessel.

4. The method according to claim 3, wherein said method further comprises injecting a compressed gas or gas mixture into said reaction vessel above said settling compartment, said compressed gas or gas mixture being used to improve mixing, as a carrier gas to strip gases produced, and/or as electron donor for the biological reduction of oxidised compounds present in the waste material.

5. The method according according to claim 3 or 4, wherein the waste material being treated is wastewater.

6. The method according to claim 3 or 4, wherein the waste material being treated is an organic waste slurry containing material such as pig manure, wasted activated sludge or kitchen waste, said method leading to the biological reduction solids content and production of reduced gases such as biohydrogen or a mixture of gases such as biogas, said slurries having a solids content up to 30 wt.%.

7. The method according to claim 2, wherein the waste material being treated is wastewater and the method is aerobic, the reaction compartment (17) outside said apparatus is aerobic and the biosolids are settled in a biosolids settling compartment (18) below said apparatus, said process further comprising:
a) Extracting reactor liquor (20) for recycling and/or discharging from said settling compartment;
b) Mixing the wastewater (19) to be treated with said extracted reactor liquor, thus providing intimate contact between biosolids and said wastewater and resulting in a mixture of both;
c) Injecting said mixture (21) into said reaction compartment, thus providing mixing in and even distribution over said reaction compartment;
d) Injecting compressed air (22) into the reactor above said settling compartment;
e) Evenly spraying (24) water (23) into the head space of said reaction compartment as to counteract foaming induced by the provision of air;
f) Collecting off-air (25) from said head space of said reaction vessel.

8. A method according to claim 2, wherein the waste material being treated is wastewater and the method is anaerobic and aerobic, the reaction compartment outside said apparatus is anaerobic and aerobic and the biosolids are settled in a biosolids settling compartment below said apparatus, said reaction compartment being further compartmentalised by one or more dividing walls (31) into one or more anaerobic compartments (28) and one or more aerobic compartments (29), said settling compartment being divided into two or more settling zones of which at least one (36) is for anaerobic sludge and located below the one or more anaerobic compartments and at least one (32) is for aerobic sludge and located below the one or more aerobic compartments, said method further comprising in the one or more anaerobic compartments:
a) Extracting reactor liquor (37) for recycling and/or discharging from said one or more anaerobic settling zones;
b) Mixing the wastewater (2) to be treated with said extracted reactor liquor, thus providing intimate contact between biosolids and said wastewater and resulting in a mixture of both;
c) Injecting said mixture (39) into said one or more anaerobic compartments;
d) Evenly spraying (41) water (40) into the head space of said one or more anaerobic compartments as to counteract foaming induced by biological gas production;
e) Collecting gas (42) from the head space of said one or more anaerobic compartments;
f) Optionally, injecting compressed gas or gas mixture, other than oxygen gas or any mixture containing oxygen, into said one or more anaerobic compartments above said anaerobic settling zones;
said method further comprising in the one or more aerobic compartments:
g) Extracting reactor liquor (33) either for recycling or discharging from said one or more aerobic settling zones;
h) Injecting said reactor liquor (34) into said one or more aerobic compartments as to induce mixing and/or into said one or more anaerobic compartments;
i) Injecting compressed air or oxygen (30) into the one or more aerobic compartments above said one or more aerobic settling zones;
j) Evenly spray (41) water (40) into the head space of said one or more aerobic compartments;
k) A means (43) to collect off-air from the head space of said one or more aerobic compartments.

9. The method according to any one of claims 2, 3, 4, 5, 7 and 8, wherein the constituents to be removed from the wastewater are organic compounds such as long chain fatty acids (LCFA), volatile fatty acids, ethanol and aromatic compounds.

10. The method according to any one of claims 2, 3, 4, 5, 7 and 8, wherein the constituents to be removed from the wastewater are nitrogen compounds such as ammonia and nitrite.

11. The method according to any one of claims 2, 3, 4, 5, 7 and 8, wherein the constituents to be removed from the wastewater are sulphur compounds such as sulphate and sulphide.

12. The method according to any one of claims 2, 3, 4, 5, 7 and 8, wherein the constituents to be removed from the wastewater are heavy metals such as copper and zinc.
